(19) Europäisches Patentamt
European Patent Office
Office européen des brevets

(11) **EP 2 838 700 B1**

(12) **EUROPÄISCHE PATENTSCHRIFT**

(45) Veröffentlichungstag und Bekanntmachung des Hinweises auf die Patenterteilung:
**28.03.2018 Patentblatt 2018/13**

(21) Anmeldenummer: **13718833.0**

(22) Anmeldetag: **19.04.2013**

(51) Int Cl.:
***B25J 9/16*** *(2006.01)*

(86) Internationale Anmeldenummer:
**PCT/EP2013/058151**

(87) Internationale Veröffentlichungsnummer:
**WO 2013/156588 (24.10.2013 Gazette 2013/43)**

(54) **BEWEGUNGSSYSTEMZUSTAND**

MOVEMENT SYSTEM STATE

ÉTAT D'UN SYSTÈME DE DÉPLACEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.04.2012 DE 102012103433**

(43) Veröffentlichungstag der Anmeldung:
**25.02.2015 Patentblatt 2015/09**

(73) Patentinhaber: **Deutsches Zentrum für Luft- und Raumfahrt e.V.**
**51147 Köln (DE)**

(72) Erfinder: **SEEHOF, Carsten**
**38110 Braunschweig (DE)**

(74) Vertreter: **Aisch, Sebastian et al**
**Gramm, Lins & Partner**
**Patent- und Rechtsanwälte PartGmbB**
**Freundallee 13 a**
**30173 Hannover (DE)**

(56) Entgegenhaltungen:
**DE-A1- 10 232 909**

**Beschreibung**

Die Erfindung betrifft ein Verfahren zum Ermitteln eines Bewegungssystemzustandes eines Bewegungssystems, das eine mittels Aktuatoren gegenüber einer festen Referenzebene in mindestens einem Freiheitsgrad bewegbare Plattform aufweist.

Mit Hilfe von Fahrzeugsimulatoren lassen sich Bewegungen eines Fahrzeugs in der realen Welt simulieren, so dass der Fahrer des Fahrzeuges das Gefühl vermittelt bekommt, als ob er ein Fahrzeug tatsächlich durch die reale Welt steuern würde. So sind beispielsweise Fahrzeugsimulatoren aus dem Stand der Technik bekannt, bei denen im Sichtfeld des Fahrers eine Bildprojektionseinrichtung angeordnet ist, welche dem Fahrer ein Bild der äußeren Umgebung des Fahrzeuges anzeigt. Führt das Fahrer des Fahrzeugsimulators nun Steuerungsaufgaben durch, wie beispielsweise Beschleunigen, Abbremsen oder Lenkeingaben, so wird je nach Steuereingabe das auf der Bildprojektionseinrichtung angezeigte Umgebungsbild an die Steuereingabe entsprechend angepasst und verändert.

Neben feststehenden Simulatoren, bei denen lediglich durch das dargestellte Außenbild und dessen Veränderung eine Simulation der Veränderung und/oder Beschleunigung des Fahrzeuges simuliert werden, sind auch Simulatoren bekannt, die zusätzlich hierzu ein Bewegungssystem aufweisen, welches zum Simulieren der auftretenden Bewegungen und Beschleunigungen innerhalb der Simulation in einem definierten Bewegungsraum eingerichtet sind. Dabei lassen sich innerhalb des Bewegungsraumes je nach Simulationstyp bis zu sechs Freiheitsgrade durch das Bewegungssystem abbilden, nämlich zum Einen die drei rotatorischen und zum Anderen die drei translatorischen Bewegungen in den drei Raumachsen. Insbesondere bei der Simulation von Luftfahrzeugen werden Bewegungssysteme für den Simulator verwendet, die eine Abbildung der Bewegung des Luftfahrzeuges in alle sechs Freiheitsgrade innerhalb des Bewegungsraumes ermöglichen.

Bis auf wenige Ausnahmen sind die hydraulisch oder elektromechanisch angetriebenen Bewegungssysteme als Parallelroboter aufgebaut, von denen wiederum die Anordnung als Hexapod oder Stewart-Plattform am weitaus häufigsten anzutreffen sind. Das Bewegungssystem weist in der Regel längenveränderbare Aktuatoren auf, welche eine an den Aktuatoren angeordnete Plattform gegenüber einer festen Referenzebene durch eine entsprechende Längenänderung der Aktuatoren bewegen können.

Die durch die Modellierung des Fahrzeuges in der Simulation gewonnenen Bewegungs- und/oder Beschleunigungswerte werden in dem Bewegungsraum des Bewegungssystems abgebildet. Dabei werden die hochfrequenten Anteile der Translationsbeschleunigungen sowie die hochfrequenten Anteile der Rotationsgeschwindigkeiten direkt in den entsprechenden Freiheitsgraden nachvollzogen. Die niederfrequenten Anteile der Translationsbeschleunigung werden dagegen durch das Kippen der Bewegungsplattform dargestellt, wodurch sich der Scheingewichtsvektor in der Kabine dreht. Die übrigen, dem Benutzer zur Verfügung stehenden Lagedarstellungen wie Außenansicht oder Instrumente beschreiben weiterhin die ursprüngliche Lage, so dass der Eindruck einer langanhaltenden, translatorischen Beschleunigung entsteht.

Nach dem derzeitigen Stand der Technik werden die aus der Simulation gewonnenen Bewegungs- und/oder Beschleunigungswerte direkt in eine Vorwärtskinematik der Plattform durch Längenänderung der Aktuatoren umgesetzt, was einer Steuerung ohne Rückmeldung des Systemzustandes entspricht. Für eine Rückmeldung muss jedoch der Systemzustand des Bewegungssystems in einer so hinreichenden Art und Güte ermittelt werden, dass auch bei den verschiedenen zu simulierenden Werten eine Regelung ermöglicht wird.

Ein weiterer Nachteil der fehlenden Kenntnis über den Bewegungssystemzustand des Bewegungssystems ist die Tatsache, dass die Leistungsfähigkeit des Gesamtsystems im laufenden Betrieb nicht überprüfbar ist, was eine Verifikation der Ansteuerung des Bewegungssystems erschwert.

Aus der DE 102 32 909 A1 ist eine Kabinenlagerung für Fahrzeugkabinen bekannt, wobei mithilfe von potentiometrischen Wegmesssystemen die relative Lage der Kabinen zum Fahrzeugrumpf und mithilfe von Beschleunigungssensoren die Beschleunigung der Fahrzeugkabine erfasst wird. Werden nun mithilfe der Beschleunigungssignale parasitäre Bewegungen der Fahrzeugkabine erkannt, kann durch Ansteuerung der Aktuatoren dem entgegengewirkt werden, um so eine Schwingungsdämpfung zu erreichen.

Es ist daher Aufgabe der vorliegenden Erfindung, eine Möglichkeit zu schaffen, den Bewegungssystemzustand eines derartigen Bewegungssystems auch im laufenden Betrieb ermitteln zu können.

Die Aufgabe wird erfindungsgemäß gelöst mit dem Verfahren der eingangs genannten Art zum Ermitteln eines Bewegungssystemzustandes in Bezug auf eine Bewegung eines Bewegungssystems, das eine mittels Aktuatoren gegenüber einer festen Referenzebene in mindestens einem Freiheitsgrad bewegbare Plattform aufweist, mit

- Ermitteln von Wegsignalen des Bewegungssystems bezüglich einer Bewegung des Bewegungssystems gegenüber der Referenzebene mittels Wegsensoren eines ersten Sensorsystems,

- Ermitteln von Beschleunigungssignalen des Bewegungssystems bezüglich der Bewegung des Bewegungssystems mittels zumindest eines an dem Bewegungssystem angeordneten Beschleunigungssensors eines zweiten Sensorsystems, und

- Berechnen des Bewegungssystemzustandes bezüglich der Bewegung des Bewegungssystems in Abhängigkeit von den ermittelten Wegsignalen und den ermittelten Beschleunigungssignalen mittels einer mikroprozessorgesteuerten Recheneinheit.

Erfindungsgemäß wird somit vorgeschlagen, dass mittels Sensoren ermittelte Wegsignale des Bewegungssystems und mittels Sensoren ermittelte Beschleunigungssignale des Bewegungssystems bei der Ausführung einer Bewegung zu einem hochgenauen Bewegungssystemzustand zusammengeführt werden, der eine derartige Genauigkeit aufweist, dass er zur Regelung der Bewegungen des Bewegungssystems herangezogen werden kann. Der Bewegungssystemzustand kann dabei beispielsweise die aktuelle Geschwindigkeit und/oder Beschleunigung der Plattform sowie die entsprechenden Richtungsvektoren der Geschwindigkeit und/oder Beschleunigung sein. Es wird dadurch in einem aktuellen Zeitschritt möglich, den Zustand des Bewegungssystems hinsichtlich einer Bewegung des Bewegungssystems so hochgenau zu ermitteln, dass es sich für eine Regelung bei der Ansteuerung des Bewegungssystems eignet.

Mittels der Wegsensoren des ersten Sensorsystems lassen sich Wegsignale bei der Bewegung des Bewegungssystems ermitteln, welche die erste Grundlage für die Berechnung des Bewegungssystemzustandes darstellen. Die Wegsignale können hierbei beispielsweise die zurückgelegte Strecke der Plattform bei einer Bewegung im Raum darstellen, die beispielsweise mit Hilfe von externen Sensoren ermittelbar ist. Hierdurch lässt sich die Bewegung der Plattform im Raum nachvollziehen. Alternativ können die Wegsignale auch die Längenänderung der Aktuatoren, wie später noch gezeigt wird, darstellen, durch die die Bewegung der Plattform im Raum realisiert wird. Aus der Längenänderung der Aktuatoren zur Ansteuerung der Plattform lässt sich dann die Bewegung der Plattform im Raum nachzeichnen.

Des Weiteren werden mit Hilfe von an dem Bewegungssystem applizierten Beschleunigungssensoren Beschleunigungssignale bei der Bewegung des Bewegungssystems ermittelt, die dann die zweite Grundlage für die Berechnung des Bewegungssystemzustandes darstellen. Die Beschleunigungssensoren können beispielsweise Linearaufnehmer, kreiselgestützte Drehratensensoren oder eine Initialplattform mit linearen Beschleunigungssensoren und kombinierten kreiselgestützten Drehratensensoren sein. Die Beschleunigungssensoren können direkt an der Plattform angeordnet werden, um so Beschleunigungssignale bei der Bewegung der Plattform in Bezug auf die Bewegung der Plattform ermitteln zu können. In einer alternativen Ausführungsform können die Beschleunigungssensoren aber auch an den Aktuatoren angeordnet werden, um so Beschleunigungssignale bei der Bewegung der einzelnen Aktuatoren zur Bewegung der Plattform ermitteln zu können. Hieraus wird es dann möglich, die Genauigkeit der Wegsensoren zu erhöhen, wodurch ebenfalls ein verbesserter Bewegungssystemzustand ermittelbar wird.

Das Bewegungssystem kann dabei zum Simulieren von Bewegungen und/oder Beschleunigungen bei einem Simulator eingesetzt werden. Unter dem Bewegungssystemzustand des Bewegungssystems wird hierbei der Zustand des Bewegungssystems hinsichtlich der aktuellen Geschwindigkeit und/oder Beschleunigung des Bewegungssystems bzw. der aktuelle Geschwindigkeitsvektor und/oder Beschleunigungsvektor verstanden.

Ganz besonders vorteilhaft ist es nun, wenn die Berechnung des Bewegungssystemzustandes mittels eines Komplementärfilters erfolgt, bei dem die Wegsignale durch einen Tiefpassfilter und die Beschleunigungssignale durch einen Hochpassfilter geleitet werden. Dabei werden die rauschbehafteten Wegsignale der Wegsensoren mit Hilfe des Tiefpassfilters geglättet, während das driftbehaftete Beschleunigungssignal der Beschleunigungssensoren mittels des Hochpassfilters um den Anteil der Drift reduziert wird. Die durch die verschiedenen Sensorarten bedingten Ablagen bzw. Ungenauigkeiten werden somit reduziert und durch den jeweiligen anderen Sensor ergänzt, wodurch sich durch Zusammenführen eine hochgenaue Bewegungsinformation bzw. ein hochgenauer Bewegungssystemzustand des Bewegungssystems ableiten lässt.

So weisen Beschleunigungssensoren in der Regel nach einiger Zeit eine entsprechende Drift bzw. Ablage auf, welche das Messergebnis verzerren. Eine derartige Drift kann je nach Güte des verwendeten Sensors zwischen einem Zehntel- bis mehrere Grad pro Stunde liegen, wodurch eine regelmäßige Kalibrierung der Sensoren notwendig wird. Auch eine bauartbedingte Fehlstellung der Achse der seismischen Masse eines Beschleunigungsaufnehmers kann zu einem konstanten Fehler führen, der reduziert werden muss. Durch einen entsprechenden Hochpassfilter können nun die niederfrequenten und driftbehafteten Anteile der Beschleunigungssignale entfernt werden, was in Verbindung mit den Wegsensoren zu einer hochgenauen Berechnung des Bewegungssystemzustandes führt.

In einer besonders vorteilhaften Ausführungsform sind die Wegsensoren so ausgebildet, dass sie eine Längenänderung der Aktuatoren des Bewegungssystems als Wegsignale detektieren können. So können die Wegsensoren beispielsweise den Ist-Zustand der einzelnen Aktuatoren ermitteln, woraus sich über die Zeit bei Ansteuerung des Bewegungssystems eine Längenänderung der Aktuatoren ableiten lässt.

Aus den Längenänderungen der Aktuatoren lässt sich nun eine Bewegungsinformation der Plattform ableiten, die aus der kinematischen Ansteuerung des Bewegungssystems folgt. Aus einer aus den Beschleunigungssignalen ermittelten Beschleunigungsinformation lässt sich sodann der Bewegungssystemzustand der Plattform berechnen, wobei es für den Erfolg der vorliegenden Erfindung unerheblich ist, ob die Beschleunigungssignale an den Aktuatoren oder an der Plattform direkt ermittelt werden. Bei einer Erfassung von Beschleunigungssignalen an den Aktuatoren lässt sich somit das Wegsignal in seiner Güte verbessern, was insbesondere dann von Vorteil ist, wenn aus dem Wegsignal durch Differentiation eine Geschwindigkeit oder sogar eine Beschleunigung der Plattform abgeleitet werden soll. Denkbar ist aber auch, dass die Beschleunigungssensoren ein Beschleunigungssignal der Plattform direkt aufnehmen und somit eine Beschleunigungsinformation der Plattform direkt abbilden.

Das Berechnen des Bewegungssystemzustandes kann beispielsweise durch Zusammenführen der Wegsignale des Bewegungssystems und der Beschleunigungssignale des Bewegungssystems zu einer den Bewegungssystemzustand repräsentierenden Bewegungsinformation des Bewegungssystems erfolgen.

In einer ganz besonders vorteilhaften Ausführungsform wird die Bewegungsinformation der Plattform aus den Längenänderungen der Aktuatoren so berechnet, dass zunächst eine Bewegung der Plattform unter der Annahme berechnet wird, dass lediglich ein einzelner Aktuator mit seiner ermittelten Längenänderung verändert wird, während die übrigen Aktuatoren in ihrer Länge unverändert bleiben. Die übrigen, nicht veränderten Aktuatoren bilden dann ein aus der Getriebelehre gut bekanntes Mehrgelenkgetriebe. Bei einer Plattform mit sechs Aktuatoren und einer Bewegungsfreiheit in allen drei Freiheitsgraden ergibt dies bei Änderung der Aktuatorlänge eines einzelnen Aktuators eine Bewegung der Plattform um eine entsprechende Schraubachse im Raum. Anschließend wird der Berechnungsschritt mit jedem weiteren Aktuator des Bewegungssystems wiederholt, wobei jedes Mal die übrigen Aktuatoren in ihrer Länge nicht geändert werden. Die sich aus diesem Berechnungsschritt ergebenden Bewegungen der Plattform können dann zu einer gesamten Bewegungsinformation der Plattform aus den Längenänderungen der Aktuatoren zusammengeführt werden, wodurch sich im aktuellen Zeitschritt eine aus den Wegsignalen der Aktuatoren abgeleitete Bewegungsinformation der Plattform berechnen lässt.

Aus den Wegsignalen lassen sich somit niederfrequente Bewegungsinformationen der Plattform ableiten, die um die fehlerbehafteten hochfrequenten Anteile reduziert wurde. Durch ein zweites Sensorsystem mit Beschleunigungssensoren lässt sich diese Lücke schließen, indem die aufgenommenen Beschleunigungssignale, die in der Regel im hochfrequenten Bereich eine hohe Genauigkeit aufweisen, um die driftbehaftete niederfrequenten Anteil reduziert wurden. Durch Zusammenführen dieser beiden Teile lässt sich somit eine hochgenaue Ermittelung des Bewegungssystemzustandes des Bewegungssystems berechnen.

Die Aufgabe wird im übrigen auch mit einem Verfahren zur Regelung der Bewegung eines Bewegungssystems, das eine mittels Aktuatoren gegenüber einer festen Referenzebene in mindestens einem Freiheitsgrad bewegbare Plattform aufweist, gelöst mit

- Ansteuern der Aktuatoren des Bewegungssystems mit Steuersignalen, um eine Bewegung der Plattform zu initiieren,

- Ermitteln des aktuellen Bewegungsystemzustandes bezüglich der Bewegung der Plattform mit dem vorstehend genannten Verfahren, und

- Regeln der Ansteuerung der Aktuatoren mit den Steuersignalen in Abhängigkeit von dem aktuellen Bewegungssystemzustand der Plattform.

Durch die Verwendung des ermittelten Bewegungssystemzustandes bei der Ansteuerung der Aktuatoren lässt sich somit eine Rückmeldung generieren, die in Art eines Regelkreises zur Regelung der Ansteuerung der Aktuatoren führt. Hierdurch wird es möglich, insbesondere Fahrzeugsimulatoren bei der Ansteuerung der Aktuatoren zu regeln und nicht, wie bisher aus dem Stand der Technik bekannt, eine einfache Ansteuerung ohne Rückmeldung. Hierdurch kann die Qualität und Güte der zu simulierenden Bewegungen wesentlich verbessert werden, wobei mit Hilfe des ermittelten Bewegungssystemzustandes auch die Leistungsfähigkeit im Betrieb hochgenau nachgewiesen werden kann.

Darüber hinaus wird die Aufgabe auch gelöst mit einem Bewegungssystem zur Ausführung von Bewegungen, das eine mittels Aktuatoren gegenüber einer festen Referenzebene in mindestens einem Freiheitsgrad bewegbare Plattform aufweist, eingerichtet zur Durchführung des vorstehenden Verfahrens, mit einem ersten Sensorsystem mit Wegsensoren zum Ermitteln von Wegsignalen des Bewegungssystems bezüglich einer Bewegung des Bewegungssystems gegenüber der Referenzebene, mit einem zweiten Sensorsystem mit mindestens einem an dem Bewegungssystem angeordneten Beschleunigungssensor zum Ermitteln von Beschleunigungssignalen, und mit einer Recheneinheit zum Berechnen des Bewegungssystemzustandes bezüglich der Bewegung des Bewegungssystems in Abhängigkeit von den ermittelten Wegsignalen und den ermittelten Beschleunigungssignalen.

Mit Hilfe des vorliegenden Verfahrens wird es somit möglich, dass die internen Sensoren zur Längenbestimmung der Aktuatoren mit in das Verfahren integriert werden können, so dass auf externe Sensoren verzichtet werden kann. Darüber hinaus ist eine solche Bestimmung der Plattformbewegung im aktuellen Zeitschritt möglich. Durch die Zusammenführung der unterschiedlichen Messverfahren kann ein hochgenauer Bewegungssystemzustand ermittelt werden, bspw. hinsichtlich der aktuellen Geschwindigkeit und/oder Beschleunigung sowie die jeweilige Richtung, in die die Geschwindigkeit und/oder Beschleunigung gerichtet ist.

Damit wird eine sehr hohe Genauigkeit bei der Feststellung des Bewegungssystemzustandes erreicht, die in ihrer Güte als Eingang in eine Regelung dienen kann. Dabei ist das Verfahren grundsätzlich echtzeitfähig, was insbesondere im Einsatz bei Simulatoren besonders vorteilhaft ist.

Die Erfindung wird anhand der beigefügten Figuren beispielhaft erläutert. Es zeigen:

Figur 1 - schematische Darstellung eines Bewegungssystems mit Mitteln zum Feststellen des Bewegungssystemzustandes;

Figur 2 - schematische Darstellung der Ermittlung einer Bewegungsin-formation aus den Längenänderungen der Aktuatoren;

Figur 3 - schematische Darstellung der Bestimmung der Geschwindigkeit eines beliebigen Punktes mit Hilfe der momentanen Schraubachse.

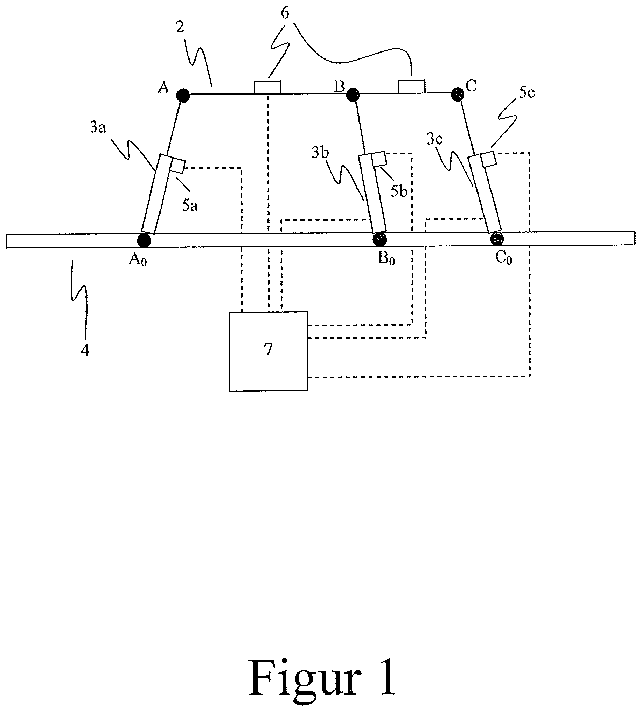

Figur 1 zeigt schematisch ein Bewegungssystem 1 in einer zweidimensionalen Ansicht. Aus Gründen der Übersichtlichkeit wurde hier auf eine dreidimensionale Darstellung einer Plattform zur Bewegung in allen sechs Freiheitsgraden verzichtet. Das nachfolgend Beschriebene ist jedoch ohne weiteres auf die dritte Dimension übertragbar.

Das Bewegungssystem 1 weist eine zu bewegende Plattform 2 auf, die über drei Aktuatoren 3a, 3a und 3c mit einer festen Referenzebene 4 über entsprechende Gelenkpunkte A, B, C sowie $A_0$, $B_0$ und $C_0$ verbunden ist. Die feste Referenzebene 4 ist in der Regel das Fundament des Bewegungssystems 1.

An den Aktuatoren 3 sind jeweils Wegsensoren 5a, 5b und 5c angeordnet, die eine Längenänderung der Aktuatoren 3 ermitteln. So ermittelt der Wegsensor 5a eine Längenänderung des Aktuators 3a, während der Wegsensor 5b eine Längenänderung des Aktuators 3b, usw. ermittelt. Aus der Längenänderung der Aktuatoren, die sich beispielsweise aus dem Ist-Zustand der jeweiligen Aktuatoren 3 über die Zeit ermitteln lassen, kann dann, wie nachfolgend nach beschrieben wird, eine Bewegungsinformation der Plattform 2 zum aktuellen Zeitschritt abgeleitet werden.

Die aus den Wegsensoren ermittelten Wegsignale der Aktuatoren 3 werden mit Hilfe eines Tiefpassfilters durch die Recheneinheit 7 geglättet, um so die rauschbehafteten, hochfrequenten Anteile zu entfernen.

An der Bewegungsplattform 2 sind des weiteren Beschleunigungssensoren 6 angeordnet, die Beschleunigungssignale bei der Bewegung der Plattform 2 aufgrund einer Aktuatorbewegung ermitteln. Auch die Beschleunigungssignale aus den Beschleunigungssensoren 6 werden in die Recheneinheit 7 geführt, wo sie dann mittels Hochpassfilters um die Anteile ihrer Drift reduziert werden.

Denkbar ist aber auch, dass die Beschleunigungssensoren 6 direkt an den Aktuatoren 3 angeordnet werden, um so das Wegsignal bzw. die daraus resultierende Längenänderung der Aktuatoren in ihrer Genauigkeit zu erhöhen, woraus sich wiederum eine hochgenaue Bewegungsinformation der Plattform 2 ableiten lässt.

Die Recheneinheit 7 führt nun die aus den Wegsignalen der Wegsensoren 5 abgeleiteten Bewegungsinformation der Plattform 2 sowie die aus den Beschleunigungssignalen der Beschleunigungssensoren 6 abgeleiteten Beschleunigungsinformation der Plattform 2 so zusammen, dass sich zum aktuellen Zeitschritt ein aktueller Bewegungssystemzustand ermitteln lässt. Dieser ermittelte Bewegungssystemzustand kann dann als eine Regelungsgröße in die Regelung bei der Aktuatoransteuerung einfließen, um so einen entsprechenden Regelkreis bilden zu können.

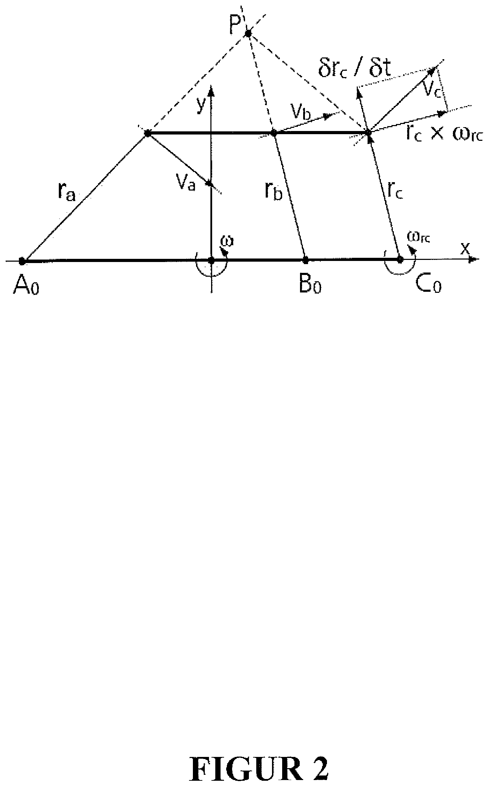

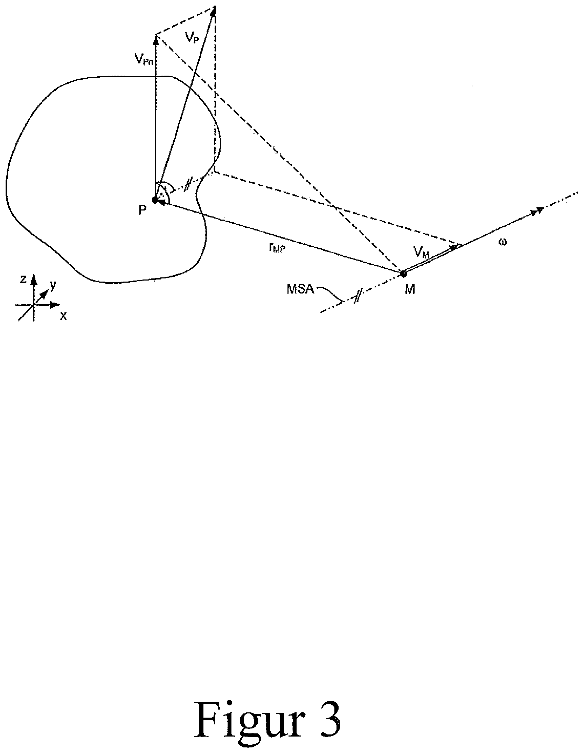

Die Bestimmung der Bewegungsinformation aus der Längenänderung der Aktuatoren soll nun im Folgenden anhand der Figuren 2 und 3 näher erläutert werden. Zur Veranschaulichung wird in Figur 2 zunächst ein zweidimensionales Ersatzmodell für eine betrachtete Stewart-Plattform eingeführt. Der fest mit dem Boden verbundene Unterrahmen verbindet starr die Gelenkpunkte Ao, $B_0$ und Co. Der in drei Freiheitsgraden bewegliche Oberrahmen 2 verbindet starr die Gelenkpunkte A, B und C. Zwischen den unteren und den oberen Gelenkpunkten bilden sich die durch die Vektoren $r_a$, $r_b$ und $r_c$ beschriebenen Aktuatoren 3.

Die Grundidee besteht darin, dass nacheinander die Ermittlung der Auswirkung der Aktuatorbewegungen für exakt einen Aktuator (auch Zylinder genannt) berechnet werden und anschließend die gesamten Auswirkungen der einzelnen Aktuatorveränderungen zu einer Plattformbewegung zusammengeführt werden. Hierzu wird nur ein Aktuator in der Länge geändert und die Länge der anderen beiden konstant gehalten, so dass die nicht veränderten Aktuatoren ein aus der Getriebelehre gut bekanntes Viergelenkgetriebe bilden. Die Bewegungsplattform 2 wird sich in diesem Fall um einen Bewegungspol P drehen, der sich grafisch im Schnittpunkt der durch die Vektoren $r_a$ und $r_b$ definierten Geraden befindet, wenn der Vektor $r_c$ in seiner Länge verändert wird. Somit kann die Bewegung des Oberrahmens 2 auch als Drehung um eine Senkrechte zur Achsenebene liegende Drehachse angesehen werden, wobei sich die Punkte A und B senkrecht zu den Strecken AoP bzw. BoP bewegen. Aufgrund der kinematischen Randbedingungen muss sich der Punkt C in Analogie hierzu senkrecht zur Strecke CP bewegen.

Der Vektor der Aktuatorlängenänderung $\delta r_c$ ist auf Grund der Aktuatorausrichtung gegeben. Wenn aber gleichzeitig die Geschwindigkeit des Punktes C senkrecht auf der Verbindungslinie zum Bewegungspol P liegen muss, folgt hieraus die zwingende Notwendigkeit eines weiteren Geschwindigkeitsanteils senkrecht zu $r_c$. Dieser ist eine senkrecht zum Aktuator stehende Rotationsgeschwindigkeit um den Fußpunkt Co des Aktuators C, welcher sich durch das Produkt der Aktuatorlänge $r_c$ mit der Winkelgeschwindigkeit $\omega_{rc}$ ausdrücken lässt. Aus dieser Überlegung folgt im Umkehrschluss, dass sich bei gegebenem Vektor der Aktuatorlängenänderung $\delta r_c$ über die Zeit $\delta t$ und bekannter Richtung der Geschwindigkeit $v_c$ der Betrag des Vektors $v_c$ zwangsläufig ergibt.

Durch diese Betrachtungsweise ist das System als Zwangslaufsystem beschrieben worden, wobei ein solches System lediglich einen Freiheitsgrad aufweist. Diese Feststellung erlaubt die analoge Betrachtung des Beschleunigungszustandes.

Im dreidimensionalen wird dieses Verfahren entsprechend auf die dritte Dimension erweitert und ist analog zu dem zuvor beschriebenen Vorgehen. Aus der Getriebelehre ist die Existenz einer momentanen Schraubachse (MSA) analog zum Momentanpol P bekannt. Jede Bewegung eines Körpers kann als Drehbewegung um eine momentane Schraubachse in Analogie zum Bewegungspol verstanden werden. Zur Bestimmung der Schraubachse wird die Position von fünf Längen für die Bestimmung der Lage der momentanen Schraubachse benötigt. Der sechste Aktuator kann dann in seiner Länge verändert werden und bestimmt somit die Änderung der Lage des Oberrahmens 2. Diese Bestimmung kann für alle Aktuatoren durchgeführt werden und damit der Einfluss der einzelnen Aktuatorgeschwindigkeiten und Beschleunigungen auf den Oberrahmen bestimmt werden. Es ist für den Fachmann selbstverständlich, dass ein solches Verfahren auch auf Bewegungssysteme mit weniger als sechs Freiheitsgraden analog angewendet werden kann.

Die Bestimmung der Geschwindigkeit eines beliebigen Punktes mit Hilfe der momentanen Schraubachse ist grafisch in Figur 3 dargestellt.

Bei bekannter Lage der momentanen Schraubachse kann dann die Geschwindigkeit mit dem bekannten Zusammenhang zu

$$\vec{v}_P = \vec{v}_M + \vec{v}_{PM} = \vec{v}_M + \vec{\omega} x r_{MP}$$

berechnet werden und die Beschleunigung ergibt sich analog zu

$$\vec{a}_P = \vec{v}_M + \vec{\omega} x (\vec{\omega} x \vec{r}_{MP}) + \dot{\vec{\omega}} x \vec{r}_{MP} + 2(\vec{\omega} x \vec{v}_M) + \ddot{\vec{r}}_{MP}$$

Das beschriebene Vorgehen kann somit unter Einsatz von Längensensoren zur Bestimmung des Geschwindigkeits- und des Beschleunigungszustandes eingesetzt werden. Die Bauart der Sensoren spielt hierfür keine Rolle. Die Gewinnung der Geschwindigkeits- und Beschleunigungssignale führt in Folge der Differentiation zu hochfrequenten Signalanteilen, die dann mit Hilfe eines Tiefpassfilters unterdrückt werden.

Anhand eines Ausführungsbeispiels eines Parallelroboters mit sechs Aktuatoren soll das beschriebene Vorgehen zur Ermittlung einer Bewegungsinformation bei der Längenänderung der Aktuatoren im Detail beschrieben werden. Im Detail gliedert sich das Vorgehen in die folgenden Schritte:

1. Bestimmung der Plücker-Koordinaten der sechs Aktuatoren

2. Auswahl des Aktuators, welcher bewegt werden soll

3. Aufstellen der 6 x 6 Determinante mit Hilfe der sechs Achsenparameter und der Plücker-Koordinaten der fünf unbewegten Aktuatoren

4. Lösen der Determinante durch Auflösen in sechs Unterdeterminanten mit jeweils dem Achsparameter als Faktor

5. Aufstellen der Gewindegleichung durch Summierung der Ergebnisse der vorherigen Schritte - das Ergebnis sind die Gewindekoordinaten

6. Berechnung der Identität der Gewindekoordinaten

7. Berechnung des Betrages der Gewindekoordinaten

8. Berechnung des Gewindeparameters

9. Berechnung der reziproken Polare der Gewindekoordinaten - dies liefern die Plücker-Koordinaten der momentanen Schraubachse

10. Umrechnen in kartesische Koordinaten von zwei Punkten auf der momentanen Schraubachse

11. Bestimmung der Geradengleichung in kartesischen Koordinaten

12. Bestimmung der Geschwindigkeit- und des Beschleunigungszustandes des Gesamtsystems aufgrund der Aktuatorgeschwindigkeit und - beschleunigung mit Hilfe der momentanen Schraubachse

13. Wiederholen der Schritte 2 bis 12 für alle anderen Aktuatoren

14. Aufstellen der Gleichung für die Geschwindigkeit und die Beschleunigung des Gesamtsystems aus allen Aktuator-Längenänderungen.

Gegeben seien die unteren Gelenkpunkte:

|          | x [mm]   | y [mm]    | z [mm] |
|----------|----------|-----------|--------|
| Gelenk 1 | 1,64982  | 2,51758   | 0      |
| Gelenk 2 | 1,35537  | 2,68758   | 0      |
| Gelenk 3 | -3,00520 | 0,17000   | 0      |
| Gelenk 4 | -3,00520 | 0,17000   | 0      |
| Gelenk 5 | 1,35537  | -2,68758  | 0      |
| Gelenk 6 | 1,64982  | -2,51758  | 0      |

und die oberen Gelenkpunkte

|          | x [mm]   | y [mm]    | z [mm]  |
|----------|----------|-----------|---------|
| Gelenk 1 | 2,29574  | 0,14000   | -2,1880 |
| Gelenk 2 | -1,02662 | 2,05816   | -2,1880 |
| Gelenk 3 | -1,26911 | 1,91816   | -2,1880 |
| Gelenk 4 | -1,26911 | -1,91816  | -2,1880 |
| Gelenk 5 | -1,02662 | -2,05816  | -2,1880 |
| Gelenk 6 | 2,29574  | -0,14000  | -2,1880 |

1. Bestimmung der Plücker-Koordinaten der sechs Aktuatoren

|            | p1=p01      | p2=p02      | p3=p03 | p4=p23      | p5=p31      | p6=p12      |
|------------|-------------|-------------|--------|-------------|-------------|-------------|
| Aktuator 1 | 0,645913107 | -2,37757565 | -2,188 | -0,30632    | 5,02306857  | -5,54871188 |
| Aktuator 2 | -2,38199746 | -0,62941066 | -2,188 | -4,50326498 | -2,24625338 | 5,54871188  |
| Aktuator 3 | 1,736084356 | 1,74816498  | -2,188 | -4,19694498 | -2,77681518 | -5,54871188 |
| Aktuator 4 | 1,736084356 | -1,74816498 | -2,188 | 4,19694498  | -2,77681518 | 5,54871188  |
| Aktuator 5 | -2,38199746 | 0,62941066  | -2,188 | 4,50326498  | -2,24625338 | -5,54871188 |
| Aktuator 6 | 0,645913107 | 2,37757565  | -2,188 | 0,30632     | 5,02306857  | 5,54871188  |

2. Auswahl des Aktuators, der bewegt werden soll

Aktuator 1 soll bewegt werden.

3. Aufstellen der 6 x 6 Determinante mit Hilfe der 6 Achsparameter und der Plücker-Koordinaten der fünf unbewegten Aktuatoren

$$\det(A) = \begin{vmatrix} p_1 & p_2 & p_3 & p_4 & p_5 & p_6 \\ -2{,}382 & -0{,}629 & -2{,}188 & -4{,}503 & -2{,}246 & 5{,}549 \\ 1{,}736 & 1{,}748 & -2{,}188 & -4{,}197 & -2{,}777 & -5{,}549 \\ 1{,}736 & -1{,}748 & -2{,}188 & 4{,}197 & -2{,}777 & 5{,}549 \\ -2{,}382 & 0{,}629 & -2{,}188 & 4{,}503 & -2{,}246 & -5{,}549 \\ 0{,}646 & 2{,}378 & -2{,}188 & 0{,}306 & 5{,}023 & 5{,}549 \end{vmatrix} \neq 0$$

4. Lösen der Determinante durch Auflösen in sechs Unterdeterminanten mit jeweils dem Achsparameter als Faktor

$$\det(A_{p1}) = p_1 \begin{vmatrix} -0{,}629 & -2{,}188 & -4{,}503 & -2{,}246 & 5{,}549 \\ 1{,}748 & -2{,}188 & -4{,}197 & -2{,}777 & -5{,}549 \\ -1{,}748 & -2{,}188 & 4{,}197 & -2{,}777 & 5{,}549 \\ 0{,}629 & -2{,}188 & 4{,}503 & -2{,}246 & -5{,}549 \\ 2{,}378 & -2{,}188 & 0{,}306 & 5{,}023 & 5{,}549 \end{vmatrix} = 812{,}694 \cdot p_1$$

$$\det(A_{p2}) = 13326{,}638 \cdot p_2$$

$$\det(A_{p3}) = -7360{,}608 \cdot p_3$$

$$\det(A_{p4}) = 1713{,}664 \cdot p_4$$

$$\det(A_{p5}) = 6307{,}915 \cdot p_5$$

$$\det(A_{p6}) = 2902{,}477 \cdot p6$$

5. Aufstellen der Gewindegleichung durch Summierung der Ergebnisse des vorherigen Schrittes. Das Ergebnis sind die Gewindekoordinaten.

$$p_a = 812{,}694\, p_1 + 13326{,}638\, p_2 + -7360{,}608\, p_3 + 1713{,}664\, p_4 + 6307{,}915\, p_5 + 2902{,}477\, p_6 = 0$$

6. Berechnung der Identität der Gewindekoordinaten

$$\Omega(a) - a_1 a_4 + a_2 a_5 + a_3 a_6 = 64.091.986{,}9$$

7. Berechnung des Betrages der Gewindekoordinaten

$$|a| = \sqrt{a_1^2 + a_2^2 + a_3^2} = 7151,979$$

8. Rechnung des Gewindeparameters

$$k = \frac{\Omega(a)}{|a|^2} = 1,253$$

9. Berechnung der reziproken Polare der Gewindekoordinaten. Dies liefert die Plücker-Koordinaten der momentanen Schraubachse

$$\overline{g}_1 = \frac{1}{|a|} \cdot a_1 = 0,240$$

$$\overline{g}_2 = \frac{1}{|a|} \cdot a_2 = 0,882$$

$$\overline{g}_3 = \frac{1}{|a|} \cdot a_3 = 0,406$$

$$\overline{g}_4 = \frac{1}{|a|} \cdot (a_4 - k \cdot a_2) = -0,187$$

$$\overline{g}_5 = \frac{1}{|a|} \cdot (a_5 - k \cdot a_2) = 0,758$$

$$\overline{g}_6 = \frac{1}{|a|} \cdot (a_6 - k \cdot a_3) = -1,538$$

10. Umrechnung in kartesische Koordinaten von zwei Punkten auf der momentanen Schraubachse

$$p_0 = \begin{pmatrix} g_{00} \\ g_{01} \\ g_{02} \\ g_{03} \end{pmatrix} = \begin{pmatrix} 0 \\ \overline{g}_1 \\ \overline{g}_2 \\ \overline{g}_3 \end{pmatrix} = \begin{pmatrix} 0 \\ 0.240 \\ 0,882 \\ 0,406 \end{pmatrix}$$

$$p_1 = \begin{pmatrix} g_{10} \\ g_{11} \\ g_{12} \\ g_{13} \end{pmatrix} = \begin{pmatrix} -\overline{g}_1 \\ 0 \\ \overline{g}_6 \\ \overline{g}_5 \end{pmatrix} = \begin{pmatrix} -0{,}240 \\ 0 \\ -1{,}538 \\ -0{,}756 \end{pmatrix}$$

$$P_1 = \frac{P_1}{g_{10}} = \begin{pmatrix} 1 \\ 0 \\ 6{,}418 \\ 3{,}165 \end{pmatrix}$$

$$P_2 = P_1 + p_0 = \begin{pmatrix} 1 \\ -0{,}240 \\ 5{,}536 \\ 2{,}759 \end{pmatrix}$$

11. Bestimmung der Geradengleichung in kartesischen Koordinaten

$$G = P_1 + t \cdot (P_2 - P_1) = \begin{pmatrix} 0 \\ 6{,}418 \\ 3{,}165 \end{pmatrix} + t \cdot \begin{pmatrix} -0{,}240 \\ -0{,}882 \\ -0{,}406 \end{pmatrix}$$

12. Wiederholung der Schritte

Die zuvor stehenden Schritte werden nunmehr für jeweils die zuvor unbewegten Aktuatoren wiederholt, wobei jeweils die übrigen Aktuatoren immer unbewegt bleiben.

13. Bestimmung der Bewegungsinformation der Plattform 2.

Aus den einzelnen Aktuatorlängenänderungen und der daraus resultierenden Bewegung der Plattform wird nun eine gesamtheitliche Bewegungsinformation des Gesamtsystemes durch ein Gleichungssystem berechnet, wobei sich dann entsprechende Geschwindigkeits- und/oder Beschleunigungszustände der Plattform 2 ableiten lassen.

**Patentansprüche**

1.  Verfahren zum Ermitteln eines Bewegungssystemzustandes in Bezug auf eine Bewegung eines Bewegungssystems (1), das eine mittels Aktuatoren (3a, 3b, 3c) gegenüber einer festen Referenzebene (4) in mindestens einem Freiheitsgrad bewegbare Plattform (2) aufweist, mit

- Ermitteln von Wegsignalen des Bewegungssystems (1) bezüglich einer Bewegung des Bewegungssystems (1) gegenüber der Referenzebene (4) mittels Wegsensoren (5a, 5b, 5c) eines ersten Sensorsystems,
- Ermitteln von Beschleunigungssignalen des Bewegungssystems (1) bezüglich der Bewegung des Bewegungssystems (1) mittels zumindest einem an dem Bewegungssystem (1) angeordneten Beschleunigungssensor (6) eines zweiten Sensorsystems, und
- Berechnen des Bewegungssystemzustandes bezüglich der Bewegung des Bewegungssystems (1) in Abhängigkeit von den ermittelten Wegsignalen und den ermittelten Beschleunigungssignalen mittels einer mikroprozessorgesteuerten Recheneinheit (7)

wobei Längenänderungen der Aktuatoren des Bewegungssystems als Wegsignale mittels der Wegsensoren detektiert werden und dass der Bewegungssystemzustand in Abhängigkeit von einer aus den Längenänderungen der Aktuatoren ermittelten Bewegungsinformation der Plattform und einer aus den Beschleunigungssignalen des Bewegungssystems ermittelten Beschleunigungsinformation mittels der Recheneinheit berechnet wird, **dadurch gekennzeichnet, dass** die Bewegungsinformation der Plattform aus den Längenänderungen der Aktuatoren berechnet wird mit

- Berechnen einer Bewegung der Plattform mittels der Recheneinheit unter der Annahme, dass nur ein Aktuator des Bewegungssystems in seiner Länge in Abhängigkeit von seiner ermittelten Längenänderung verändert wird und die übrigen Aktuatoren des Bewegungssystems keine Längenänderung erfahren,
- Wiederholen des vorstehenden Schrittes mit jedem weiteren Aktuator des Bewegungssystems, und
- Berechnen der Bewegungsinformation der Plattform aus den verschiedenen berechneten Bewegungen der jeweiligen Längenänderung der Aktuatoren mittels der Recheneinheit.

2. Verfahren nach Anspruch 1, **dadurch gekennzeichnet, dass** die Berechnung des Bewegungssystemzustandes mittels eines Komplementärfilters erfolgt, bei dem das Wegsignal durch einen Tiefpassfilter und das Beschleunigungssignal durch einen Hochpassfilter geleitet wird.

3. Verfahren nach einem der vorhergehenden Ansprüche, **gekennzeichnet durch** Regeln der Ansteuerung des Bewegungssystems in Abhängigkeit von dem berechneten Bewegungssystemzustand und von aus einer Simulation abgeleiteten Bewegungswerten.

4. Verfahren nach Anspruch 3, **gekennzeichnet durch** Ermitteln der für die Ansteuerung der Aktuatoren benötigten Steuersignale in Abhängigkeit von aus einer Simulation abgeleiteten Bewegungswerten.

5. Bewegungssystem zum Ausführen von Bewegungen, das eine mittels Aktuatoren gegenüber einer festen Referenzebene in mindestens einem Freiheitsgrad bewegbare Plattform aufweist, eingerichtet zur Durchführung des Verfahrens nach einem der vorhergehenden Ansprüche, mit einem ersten Sensorsystem mit Wegsensoren zum Ermitteln von Wegsignalen des Bewegungssystems bezüglich einer Bewegung des Bewegungssystems gegenüber der Referenzebene, mit einem zweiten Sensorsystem mit mindestens einem an dem Bewegungssystem angeordneten Beschleunigungssensor zum Ermitteln von Beschleunigungssignalen, und mit einer Recheneinheit zum Berechnen des Bewegungssystemzustandes bezüglich der Bewegung des Bewegungssystems in Abhängigkeit von den ermittelten Wegsignalen und den ermittelten Beschleunigungssignalen.

6. Bewegungssystem nach Anspruch 5, **dadurch gekennzeichnet, dass** die Recheneinheit zur Regelung der Ansteuerung des Bewegungssystems in Abhängigkeit von dem berechneten Bewegungssystemzustandes eingerichtet ist.

**Claims**

1. Method for detecting a movement system state with reference to a movement of a movement system (1), which has a platform (2), which can be moved in at least one degree of freedom in relation to a fixed reference level (4) by means of actuators (3a, 3b, 3c), with

- the detection of path signals of the movement system (1) with reference to a movement of the movement system (1) in relation to the reference level (4) by means of path sensors (5a, 5b, 5c) of a first sensor system,
- the detection of acceleration signals (1) of the movement system with reference to the movement of the movement system (1) by means of at least one acceleration sensor (6) arranged on the movement system (1) of a second sensor system, and
- the calculation of the movement system state with reference to the movement of the movement system (1) depending on the detected path signals and the detected acceleration signals by means of a microprocessor-controlled computing unit (7),

wherein length changes of the actuators of the movement system are detected as path signals by means of path sensors and that the movement system state is calculated depending on movement information of the platform detected from the length changes of the actuators and acceleration information detected from the acceleration signals of the movement system by means of the computing unit,

**characterized in that** the movement information of the platform is calculated from the length changes of the actuators with

- a calculation of a movement of the platform by means of the computing unit under the assumption that only one actuator of the movement system is changed in its length depending on its detected length change and the remaining actuators of the movement system do not experience any length change,
- repeating the preceding step with every other actuator of the movement system and
- calculating the movement information of the platform from the various calculated movements of the respective length change of the actuators by means of the computing unit.

2. Method according to Claim 1, **characterized in that** the calculation of the movement system state occurs by means of a complementary filter, where the path signal is guided through a low-pass filter and the acceleration signal is guided through a high-pass filter.

3. Method according to any one of the preceding claims, **characterized by** regulation of the control of the movement system depending on the calculated movement system state and movement values derived from a simulation.

4. Method according to Claim 3, **characterized by** the detection of control signals required to control the actuators depending on movement values deriving from a simulation.

5. Movement system for carrying out movements, which has a platform, which can be moved in at least one degree of freedom in relation to a fixed reference level by means of actuators, set up to carry out the method according to any one of the preceding claims, with a first sensor system with path sensors for detecting path signals of the movement system with reference to a movement of the movement system with relation to the reference level, with a second sensor system with at least one acceleration sensor arranged on the movement system to detect acceleration signals, and with a computing unit to calculate the movement system state with reference to the movement of the movement system depending on the path signals detected and the acceleration signals detected.

6. Movement system according to Claim 5, **characterized in that** the computing unit is set up to regulate the movement system control system depending on the calculated movement system state.

**Revendications**

1. Procédé pour déterminer un état de système de mouvement en référence à un mouvement d'un système de mouvement (1), lequel possède une plate-forme (2) qui peut être déplacée dans au moins un degré de liberté au moyen d'actionneurs (3a, 3b, 3c) par rapport à un plan de référence (4) fixe, comprenant

- détermination de signaux de course du système de mouvement (1) concernant un mouvement du système de mouvement (1) par rapport au plan de référence (4) au moyen de capteurs de course (5a, 5b, 5c) d'un premier système de détection,
- détermination de signaux d'accélération du système de mouvement (1) concernant le mouvement du système de mouvement (1) au moyen d'au moins un capteur d'accélération (6), d'un deuxième système de détection, disposé sur le système de mouvement (1), et
- calcul de l'état de système de mouvement concernant le mouvement du système de mouvement (1) en fonction des signaux de course déterminés et des signaux d'accélération déterminés au moyen d'une unité de calcul (7) commandée par microprocesseur

les changements de longueur des actionneurs du système de mouvement étant détectés sous la forme de signaux de course au moyen des capteurs de course et que l'état de système de mouvement est calculé au moyen de l'unité de calcul en fonction d'une information de mouvement de la plate-forme déterminée à partir des changements de longueur des actionneurs et d'une information d'accélération déterminée à partir des signaux d'accélération du système de mouvement,

**caractérisé en ce que** l'information de mouvement de la plate-forme est calculée à partir des changements de longueur des actionneurs, avec

- calcul d'un mouvement de la plate-forme au moyen de l'unité de calcul en prenant pour hypothèse que la longueur d'un seul actionneur du système de mouvement est modifiée en fonction du changement déterminé de sa longueur et les autres actionneurs du système de mouvement ne connaissent aucun changement de longueur,
- répétition de l'étape précédente avec chaque actionneur supplémentaire du système de mouvement, et
- calcul de l'information de mouvement de la plate-forme à partir des différents mouvements calculés du changement de longueur correspondant des actionneurs au moyen de l'unité de calcul.

**2.** Procédé selon la revendication 1, **caractérisé en ce que** le calcul de l'état de système de mouvement est effectué au moyen d'un filtre complémentaire avec lequel le signal de course est conduit à travers un filtre passe-bas et le signal d'accélération à travers un filtre passe-haut.

**3.** Procédé selon l'une des revendications précédentes, **caractérisé par** la régulation de la commande du système de mouvement en fonction de l'état de système de mouvement calculé et de valeurs de mouvement dérivées d'une simulation.

**4.** Procédé selon la revendication 3, **caractérisé par** la détermination des signaux de commande nécessaires pour la commande des actionneurs en fonction de valeurs de mouvement dérivées d'une simulation.

**5.** Système de mouvement destiné à exécuter des mouvements, lequel possède une plate-forme qui peut être déplacée dans au moins un degré de liberté au moyen d'actionneurs par rapport à un plan de référence fixe, conçu pour mettre en oeuvre le procédé selon l'une des revendications précédentes, comprenant un premier système de détection doté de capteurs de course servant à déterminer des signaux de course du système de mouvement concernant un mouvement du système de mouvement par rapport au plan de référence, comprenant un deuxième système de détection doté d'au moins un capteur d'accélération disposé sur le système de mouvement servant à déterminer des signaux d'accélération, et comprenant une unité de calcul servant à calculer l'état de système de mouvement concernant le mouvement du système de mouvement en fonction des signaux de course déterminés et des signaux d'accélération déterminés.

**6.** Système de mouvement selon la revendication 5, **caractérisé en ce que** l'unité de calcul est conçue pour réguler la commande du système de mouvement en fonction de l'état de système de mouvement calculé.

# Figur 1

**FIGUR 2**

Figur 3

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- DE 10232909 A1